# EUROPEAN PATENT APPLICATION

(11) **EP 4 679 868 A1**
(43) Date of publication of application: **14.01.2026**
(21) Application number: 25186928.5
(22) Date of filing: 02.07.2025
(51) Int. Cl.: H04W 4/44, H04W 4/02, H04L 41/50

(54) **MANAGING QUALITY OF SERVICE IN TELEMATICS CONTROL UNIT USING MACHINE LEARNING**

(30) Priority: 08.07.2024 US 202418766521
(71) Applicant: Harman Becker Automotive Systems, Inc., Novi, MI 48377 (US)
(72) Inventor: Sehra, Suman A., Folsom, CA, 95630 (US); Gunasekaran, Aravind, Novi, MI, 48375 (US); Yang, Xiaojian, Troy, MI, 48098 (US); Dey, Sumit, Ann Arbor, MI, 48103 (US); Yatagiri, Maria Praveen Kumar, Cupertino, CA, 95014 (US); Nakanish, Toshiyuki, Wixom, MI, 48393 (US)
(74) Representative: Kraus & Lederer PartGmbB

(57) **Abstract**

Systems and methods are provided for a quality of service management (QoS) of a telematics control unit (TCU) of a vehicle. The quality of service management system includes a classification machine learning model adapted to receive TCU behavior parameters and environment parameters and output a usage scenario and QoS level according to the TCU behavior parameters and the environment parameters.

## Description

### TECHNICAL FIELD

The present description relates generally to quality of service management for automotive telematics control unit connectivity using machine learning.

### BACKGROUND AND SUMMARY

In-cabin automotive connectivity enables various devices and services to enhance the user experiences of occupants of a vehicle. Providing high-quality connectivity in a dynamic and complex environment involves multiple factors, such as the number and type of devices and services, the preferences and behaviors of the occupants, the environmental and traffic conditions, and the available connectivity resources. For example, the connectivity quality may vary depending on the location, speed, and direction of the vehicle, the network coverage and congestion, and the interference from other sources. Moreover, the connectivity demands may differ depending on the use cases, such as entertainment, navigation, communication, and safety, making providing high quality connectivity dependent on context.

Thus, embodiments are disclosed herein that address at least some of the issues described above with a system, comprising: a classification machine learning model adapted to receive TCU behavior parameters and environment parameters and output a TCU usage scenario and quality of service (QoS) level according to the TCU behavior parameters and the environment parameters. In some examples, the system further comprises a reinforcement learning agent adapted to update controlling parameter policy according to the TCU usage scenario and the QoS level. In this way, the QoS management systems disclosed herein may adapt to preferences and behaviors of occupants and the environmental and traffic conditions to deliver context aware user in-cabin experiences using artificial intelligence and machine learning. Context awareness may increase quality of connectivity service compared to other systems and methods for connectivity. Further, bandwidth consumption may be reduced by the QoS management system optimizing bandwidth allocation and utilization of the in-cabin devices and services to avoid unnecessary or excessive consumption. For example, the QoS management system may reduce the bandwidth consumption of low-priority or background services, such as software updates or data synchronization, when the bandwidth is scarce or expensive. Further still, the QoS management system may ensure the connectivity quality of the safety-related devices and services, such as collision avoidance, emergency call, or remote diagnostics, to prevent or mitigate potential accidents or malfunctions. For example, the QoS management system may prioritize the connectivity of such devices and services, and use encryption and authentication techniques to protect the data transmission.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE FIGURES

FIG. 1 shows a schematic depicting an example operating environment for implementing the quality of service (QoS) management systems and methods in accordance with one or more embodiments of the present disclosure;
FIG. 2 shows a schematic of measuring and connecting parameters used in the QoS management systems in accordance with one or more embodiments of the present disclosure;
FIG. 3 shows a flowchart of a method for QoS management in accordance with one or more embodiments of the present disclosure;
FIG. 4 shows a flowchart of a method for QoS management in accordance with one or more embodiments of the present disclosure;
FIG. 5 shows a schematic of a QoS management system in accordance with one or more embodiments of the present disclosure;
FIG. 6 shows a schematic of a QoS management system in accordance with one or more embodiments of the present disclosure;
FIG. 7 shows a schematic of an example software architecture for a QoS management system in accordance with one or more embodiments of the present disclosure; and
FIG. 8 shows a flowchart of a method for implementing a QoS management system in accordance with one or more embodiments of the present disclosure.

### DETAILED DESCRIPTION

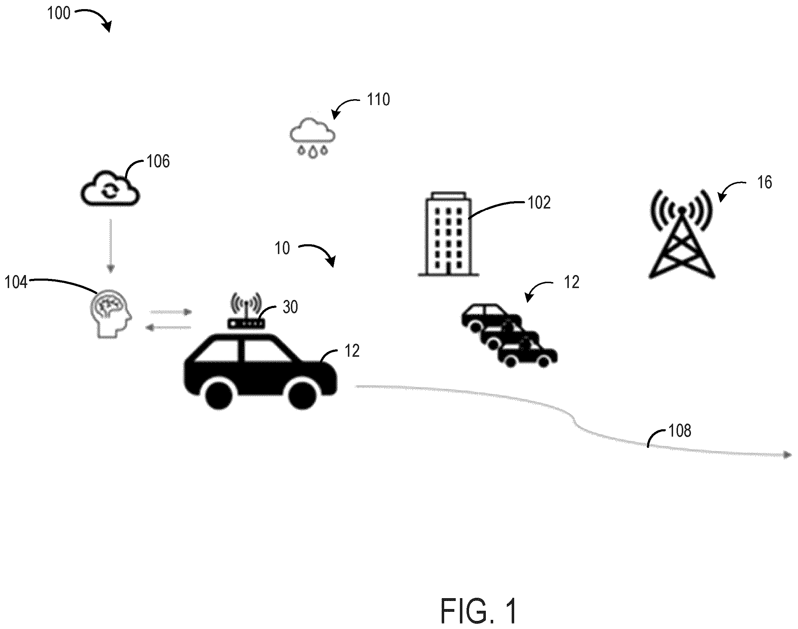

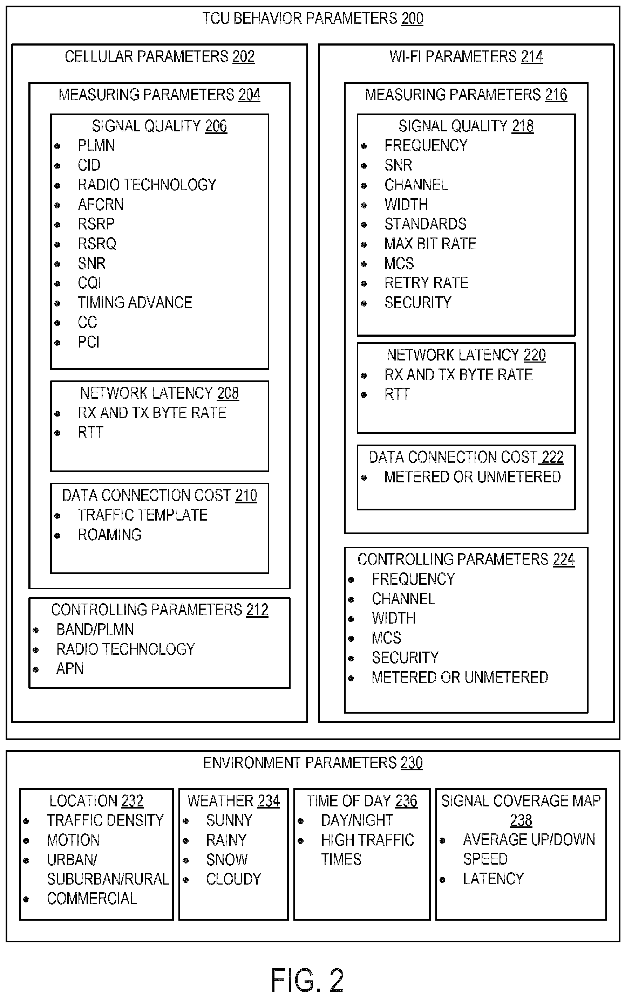

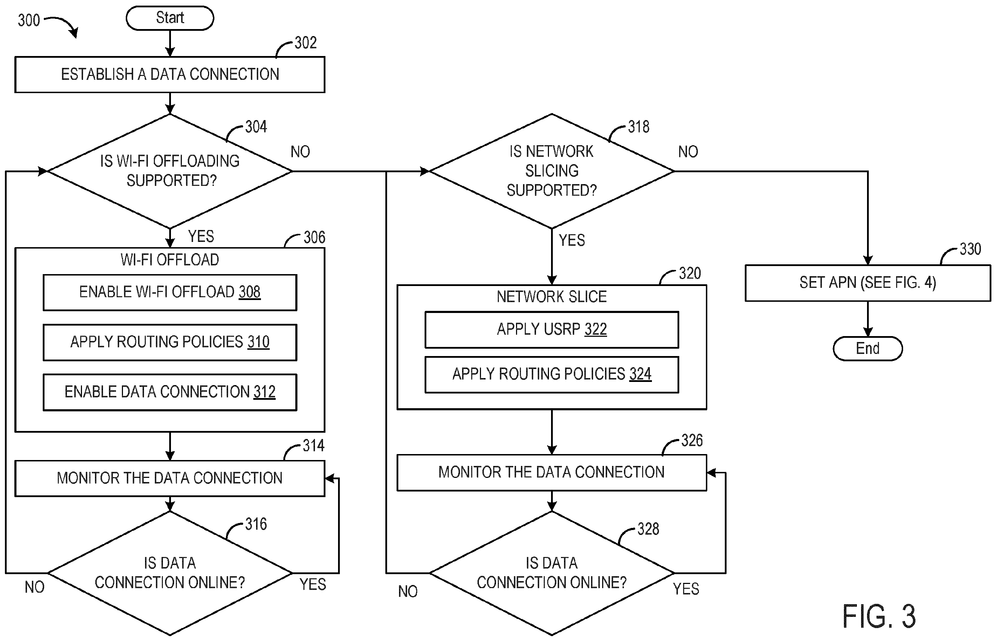

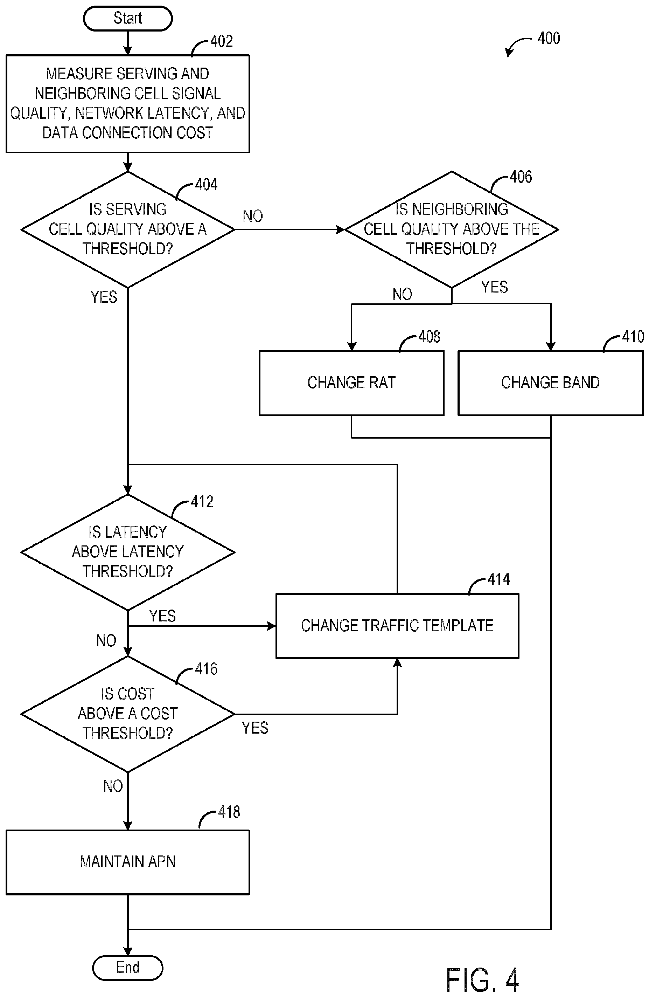

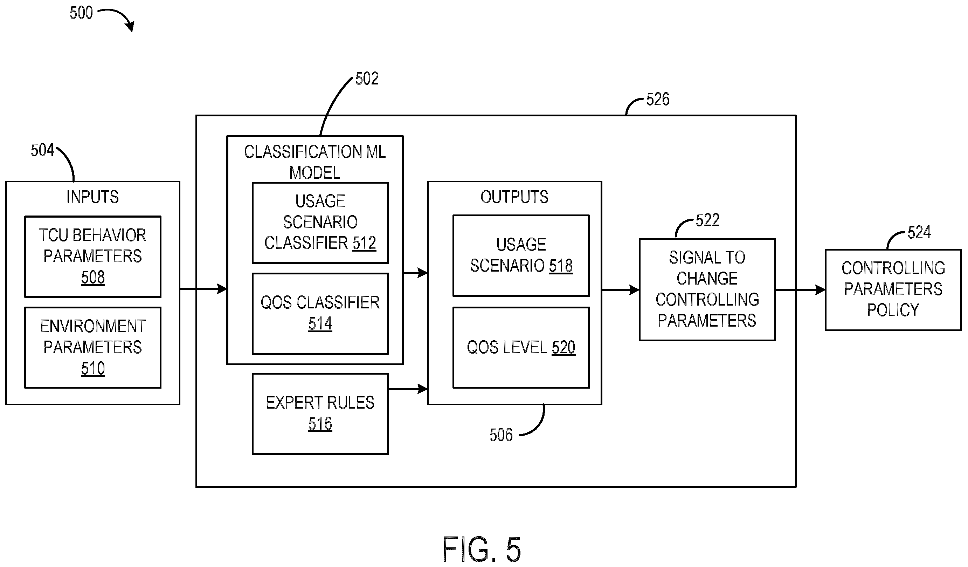

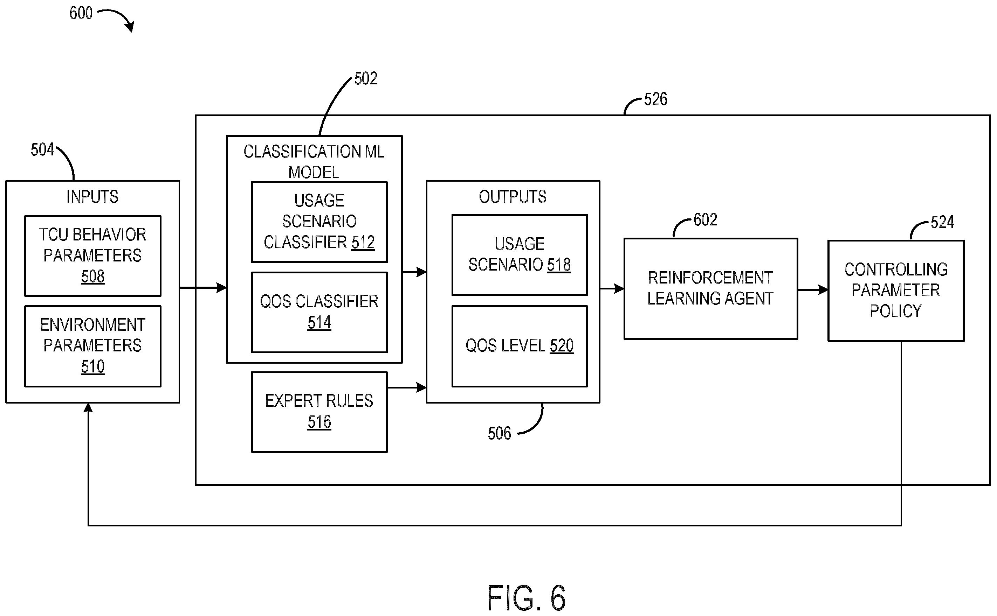

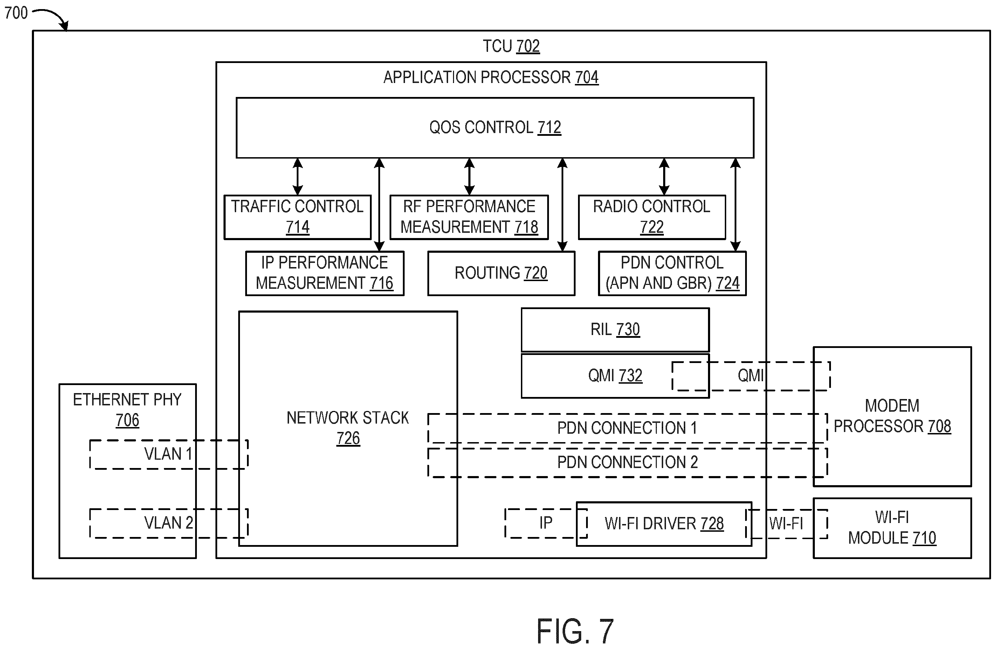

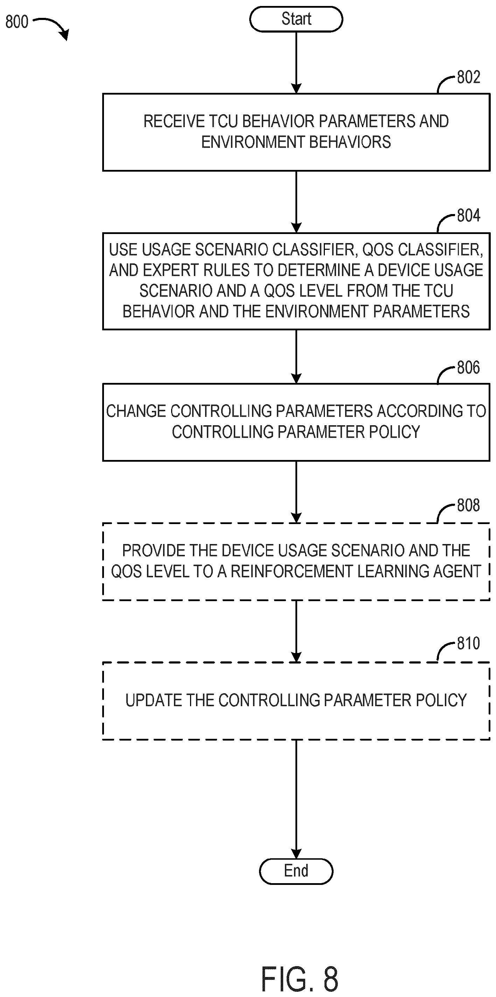

The following description relates to systems and methods for management of quality of service (QoS) for telematics control units (TCUs) in vehicles using machine learning (ML). An exemplary operating environment is shown in FIG. 1 for a vehicle connectivity system comprising one or more telematics-equipped vehicles using the QoS management system in accordance with one or more embodiments of the present disclosure. The QoS management system may be able to manage QoS based on environmental and telematics unit-related parameters to increase quality of cellular and Wi-Fi network connections. The QoS management system may use measuring parameters to determine corresponding adjustments to controlling parameters. Examples of measuring and controlling parameters are provided in an organizational chart in FIG. 2. The QoS management system may employ different methods for increasing quality of connectivity including Wi-Fi or edge network offloading, network slicing, and changing access point name (APN). FIGS. 3 and 4 show flowcharts of methods for Wi-Fi or edge network offloading, network slicing, and changing APN. FIGS. 5 and 6 show example schematics of QoS management systems in accordance with one or more embodiments of the present disclosure. FIG. 7 shows an example schematic of a software system for implementing the QoS management systems in accordance with one or more embodiments of the present disclosure. FIG. 8 shows a flowchart of an example method for implementing the QoS management system.

It is to be understood that the specific assemblies and systems illustrated in the attached drawings, and described in the following specification are exemplary embodiments of the inventive concepts defined herein. For purposes of discussion, the drawings are described collectively. Thus, like elements may be commonly referred to herein with like reference numerals and may not be re-introduced.

With reference to FIG. 1, an exemplary operating environment 100 is shown that comprises an inter-vehicle communications system 10 including one or more telematics-equipped vehicles 12. The following paragraphs simply provide a brief overview of one possible configuration for providing wireless communication between each of the vehicles 12, and between the vehicles 12 and cellular towers 16. It should be appreciated that other systems not shown here may include the antenna assembly disclosed herein.

The vehicles 12 are depicted in the illustrated embodiment as passenger cars, but it should be appreciated that any other vehicle including motorcycles, trucks, sports utility vehicles (SUVs), recreational vehicles (RVs), marine vessels, aircraft, etc., can also be used.

Telematics unit 30 may be an OEM-installed or aftermarket device that enables vehicles 12 to receive and/or transmit wireless signals corresponding to voice, text, and/or other data. Telematics unit 30 may also be referred to herein as a telematics control unit (TCU). Thus, telematics unit 30 may send and/or receive wireless signals (e.g., electromagnetic waves). Telematics unit 30 may therefore be referred to as transceiver 30, since it may be capable of both sending and receiving wireless signals. Wireless signals produced by the telematics unit 30 of vehicles 12 may be sent to and received by one or more of the vehicles 12 and cellular towers 16. Thus, each of the vehicles 12 may be in wireless communication with one another for sending and/or receiving information there-between via the telematics unit 30. Further, each of the vehicles 12 may be in wireless communication with the cellular towers 16 for sending and/or receiving information therebetween.

As such, each of the vehicles 12 may communicate with one or more of cellular towers 16, other telematics-equipped vehicles 12, or some other entity or device capable of transmitting and/or receiving wireless signals. Telematics unit 30 may enable the vehicle to offer a number of different services including those related to messaging, navigation, telephony, emergency assistance, diagnostics, infotainment, and so on. Wireless networking between the vehicles 12 and other networked devices can also be carried out using telematics unit 30. For this purpose, telematics unit 30 can be configured to communicate wirelessly according to one or more wireless protocols.

Telematics unit 30 can be used to provide a diverse range of vehicle services that involve wireless communication to and from the vehicles 12. Such services can include: remote control of certain vehicle features; turn-by-turn directions and other navigation-related services; airbag deployment notification and other emergency or roadside assistance-related services that are provided in connection with one or more collision sensor interface modules such as a body control module (not shown); diagnostic reporting using one or more diagnostic modules; and infotainment-related services where music, webpages, movies, television programs, videogames and/or other information is downloaded by an infotainment module (not shown) and is stored for current or later playback. Further, the telematics unit 30 of each of the vehicles 12 may be capable of sending and/or receiving SMS messages, and phone calls via the cellular network provided by the cellular towers 16. As such, telematics unit 30 may utilize cellular communication and thus may include a cellular chipset for voice communications such as hands-free calling. The above-listed services are by no means an exhaustive list of all of the capabilities of telematics unit 30, but are simply an enumeration of some of the services that the exemplary telematics unit is capable of offering. Furthermore, it should be understood that at least some of the aforementioned modules could be implemented in the form of software instructions saved internal or external to telematics unit 30, they could be hardware components located internal or external to telematics unit 30, or they could be integrated and/or shared with each other or with other systems located throughout the vehicles 12, to cite but a few possibilities.

Vehicle connectivity quality (e.g., signal quality, latency, etc.) may be dependent on a variety of factors. For example, quality of connectivity may be affected by parameters including a path 108 of the vehicle 12 and surroundings 102, including buildings and natural environment such as weather 110. Vehicle conditions such as a number of users, type of services such as those listed above, speed and location of the vehicle 12, and more may also affect vehicle connectivity quality. Further, the cellular tower 16 quantity, location, and traffic condition may also affect connectivity quality.

Quality of service (QoS) management may increase vehicle connectivity quality by controlling network traffic to optimize and prioritize signals. The telematics unit 30 may utilize one or more machine learning models 104 to manage QoS of vehicle connectivity. For example, a first machine learning model may classify a usage scenario according to vehicle and environment conditions. A second machine learning model may classify QoS level according to signal quality, latency, and the like. In this way, QoS may be optimized according to a variety of conditions. In some examples, a third machine learning model may adjust rules according to which operation is adjusted to increase QoS levels. In this way, the rules may evolve during operation to further increase QoS levels. The machine learning models 104 may be implemented directly on the telematics unit 30, other in-vehicle infotainment (IVI) related devices of the vehicles 12, or remotely on a cloud server 106.

The machine learning algorithms employed by the telematics unit 30 may evaluate measuring parameters and controlling parameters related to wireless connections. The measuring parameters are parameters that may be measured or monitored, for example parameters related to network identification, device identification, signal frequency and power, bandwidth, quality of signals, signal travel times, and the like. Controlling parameters are parameters that may be adjusted (e.g., by an end user). For example, the controlling parameters may be manipulated according to an ML model's classification of the measuring parameters. Measuring and controlling parameters may be different for Wi-Fi and cellular connections. The measuring and controlling parameters may be parameters of a modem of a network access device (NAD) of a TCU, such as the telematics unit 30 of FIG. 1. The measuring and controlling parameters can be provided by the NAD to application software (e.g., software architecture 700 of FIG. 7) as a reference interface or application programming interface (API).

FIG. 2 shows an organizational map of TCU behavior parameters 200 sorted into cellular parameters 202 related to cellular connections (e.g., between vehicles 12 and cellular towers 16 in FIG. 1) and Wi-Fi parameters 214 related to Wi-Fi network or edge network connections, among other subgroups therefrom. FIG. 2 further shows environment parameters 230, including location 232, weather 234, time of day 236, and signal coverage map 238. The environment parameters 230 may be detected by sensors, timers, and the like. Such sensors may be of the vehicle, a neighboring vehicle in communication with the vehicle, or other locations where information can be provided to the TCU of the vehicle. Thus, the environment parameters 230 may also be considered measuring parameters.

The cellular parameters 202 may include measuring parameters 204 and controlling parameters 212. Measuring parameters 204 may include signal quality 206, network latency 208, and data connection cost 210. Signal quality 206 may depend on public land mobile network (PLMN), calling identity delivery (CID), radio technology (e.g., generation of technology), absolute radio-frequency channel number (ARFCN), reference signals received power (RSRP), reference signals received quality (RSRQ), signal interference and noise ratio (SNR), channel quality indicator (CQI), timing advance, call control (CC), and physical cell identification (PCI). Network latency 208 may be determined based on byte rate for receiving (Rx) and transmitting (Tx) signals, and round trip time (RRT) for internet protocol (IP) packages. Data connection cost 210 may depend on traffic template, and roaming. Controlling parameters 212 may include band, PLMN, radio technology, and access point name (APN).

The Wi-Fi parameters 214 may include measuring parameters 216 and controlling parameters 224. The measuring parameters 216 may include signal quality 218, network latency 220, and data connection cost 222. The signal quality 218 may depend on frequency, SNR, channel, width, standards, maximum bit rate, modulation coding scheme (MCS), retry rate, and security. Network latency 220 may be determined based on Rx and Tx byte rate, and RTT for IP packages. The data connection cost 222 may be dependent on whether the connection is metered or unmetered. Controlling parameters 224 may include frequency, channel, width, standards, MCS, security, and whether the connection is metered or unmetered.

Environment parameters 230 include location 232, weather 234, time of day 236, and signal coverage map 238. Location 232 may include traffic density (e.g., vehicles in an area), motion of the vehicle (e.g., parking, moving, speed, trajectory, etc.), geographical location (e.g., urban, suburban, or rural), and surroundings (e.g., commercial area, buildings, etc.). Weather 234 may monitor whether it is raining, sunny, cloudy, snowing, and the like. Time of day 236 may include categorizing time into day or night and/or into high traffic times and low traffic times. Signal coverage map 238 may indicate average up/down speed and latency for network signals in a given area.

The environment parameters 230 may affect the measuring parameters 204 and measuring parameters 216. Thus, a machine learning model (e.g., ML model 502 of FIG. 5) able to classify environmental conditions and associate use scenarios (e.g., sets of environment and TCU behavior parameters) with QoS may be able to manage QoS more effectively than systems which do not consider environment parameters, thereby improving in-cabin user experience. Additional parameters than those shown in FIG. 2 and listed above may also be assessed and adjusted in a QoS management system without departing from the scope of the present disclosure.

The QoS management systems and methods in accordance with one or more embodiments of the present disclosure using the parameters described above may be implemented for a variety of uses, where in at least some examples, the uses may each be classified into one of four categories: (1) autonomous driving, (2) advanced driver assistance systems (ADAS) and safety, (3) infotainment and navigation, and (4) convenience. For example, telematics functions related to autonomous driving may include forward collision warning (FCW), blind spot warning (BSW), vulnerable road user (VRU), intersection movement assist (IMA) and the like. For example, telematics functions related to ADAS and safety may include eCall, traffic light information (TLI), situational awareness, cluster information, driver monitoring systems (DMS), occupant monitoring systems (OMS), and the like. For example, telematics functions related to infotainment and navigation may include high-definition (HD) maps, head up display (HUD), in-vehicle infotainment (IVI), passenger display information, streaming to rear-seat entertainment (RSE), gaming, and the like. For example, telematics functions related to convenience may include access point, heating, ventilation, and air conditioning (HVAC) control, vehicle settings, and the like.

Priority levels may be assigned according to a category to which a telematics function belongs, for example the four aforementioned categories. Corresponding QoS threshold values may be allocated to each priority level. For example, autonomous driving may be higher priority than ADAS and safety. ADAS and safety may be higher priority than infotainment and navigation. Infotainment and navigation may be higher priority than convenience. As such, the QoS threshold for autonomous driving may be higher than the QoS threshold for ADAS and safety, the QoS threshold for infotainment and navigation, and the QoS threshold for convenience. The QoS threshold for ADAS safety may be greater than the QoS threshold for infotainment and navigation, and the QoS threshold for convenience. The QoS threshold for infotainment and navigation may be greater than the QoS threshold for convenience. In this way, separate QoS thresholds may be allocated for each category according to a priority of the category. Thus, signals may be prioritized according to priority to conserve bandwidth and increase QoS.

Management of QoS may be demanded to ensure QoS does not exceed the requested level. For example, management of QoS may include implementing one or more of Wi-Fi or edge network offloading, network slicing, and APN adjusting.

Wi-Fi or edge network offloading, also referred to herein more concisely as offloading, may generally be more cost-effective than network slicing and adjusting the APN. For example, a Wi-Fi network may provide an unmetered connection in contrast with cellular connections. Thus, offloading may be checked for feasibility before other QoS management methods in at least some examples. Offloading may include reselecting between a non-Wi-Fi network to a Wi-Fi network, for example, switching between a third generation partnership project (3GPP) network and a non-3GPP network. Non-3GPP networks may include untrusted non-3GPP and trusted non-3GPP. Offloading may also be implemented in examples relating to other generations of technology than third generation. Advantages of Wi-Fi offloading for a user equipment (UE) user may include high bandwidth and low cost data connectivity in device. Advantages of Wi-Fi offloading for a network operator may include reducing and balancing the load of the 3gpp network, and addressing indoor coverage challenges with high frequency band.

Offloading may be triggered by the UE user, in at least some examples. For example, a user device may periodically perform wireless local area network (WLAN) scanning. When a known or an open Wi-Fi network is found during WLAN scanning, an offloading procedure may be initiated. The offloading procedure may include prompting a user to select a network. In some examples, interworking wireless local area network (IWLAN) may achieve authentication without manual user intervention, such as entering a username-password, as is common in many Wi-Fi networks. For example, authentication protocols may be based on the use of SIM cards, which may already be provisioned in 3GPP handsets, or other devices. Mobility management may be used in offloading procedures to provide seamless mobility between cellular radio access network (RAN) to Wi-Fi RAN as well as between inter-operator Wi-Fi RANs to the user. Mobility procedures may be based on an IP-level mobility management protocol implemented to allow handover from 3GPP access to WLAN access or vice versa, for example.

Wi-Fi offloading may be performed in several different methods. In some examples, Wi-Fi and cellular networks may be coupled. Some devices, such as personal wireless devices, may select and connect to Wi-Fi networks based on explicit user preferences or pre-configured preferences, already stored in the UE. Additionally or alternatively, devices may be configured to automatically switch to a known Wi-Fi network upon detection by routing the IP traffic over the Wi-Fi IP connection. Such automatic connection methods may not demand coupling of the cellular and the Wi-Fi networks. Wi-Fi offloading may be useful in high download use cases, such as diagnostics, log transfer, software updates, and remote services.

In addition to offloading, another aspect of QoS management in accordance with one or more embodiments of the present disclosure includes network slicing. Network slicing may increase control of QoS. However, network slicing may increase resource demand and request agreement with a mobile network operator (MNO). Network slicing may enable multiplexing of virtualized and independent logical networks on the same physical network infrastructure. Each network slice may be an isolated end-to-end network tailored to fulfill diverse requirements requested by a particular application, such as dedicated network for autonomous mobility with high availability and safety of vehicles.

Thus, network slicing may support networks that are designed to efficiently embrace a plethora of services with different service level requirements (SLR), allowing implementation of flexible and scalable network slices on top of a common network infrastructure. Each network slice may be administrated by a mobile virtual network operator (MVNO). An infrastructure provider (e.g., owner of the telecommunication infrastructure) leases its physical resources to the MVNOs that share the underlying physical network. According to the availability of the assigned resources, a MVNO may autonomously deploy multiple network slices that are customized to the various applications provided to its own users. There may be various different ways of slicing the network.

In addition to offloading and network slicing, adjusting an APN may be used in managing QoS in accordance with one or more embodiments of the present disclosure. Similar to network slicing, access to enterprise APNs may demand MNO agreement. Standard APNs may be available without MNO agreement. Managing QoS via APN selection may be more cost-effective than network slicing.

When UE initially attaches to a network, it may be assigned default bearer which remains as long as the UE is attached to the network. Each default bearer comes with an IP address. Default bearers may be a non-guaranteed bit rate (GBR). Dedicated bearers may provide dedicated tunnels to one or more specific traffic (e.g., VoIP, video etc.). Dedicated bearers may act as an additional bearer on top of default bearer. Thus, dedicated bearers may not have separate IP address due to the dedicated bearer being linked to one of the default bearers established previously. Dedicated bearers may include GBR or non-GBR. For some services, dedicated bearers may provide higher user experience quality. For example, dedicated bearers may use traffic flow templates (TFT) to prioritize specific services.

A model of QoS management in accordance with one or more embodiments of the present disclosure may include a first level and a second level, where the first level changes the radio frequency (RF) layer and the second level changes the internet protocol (IP) layer. For example, changes to the RF layer may include Wi-Fi offloading and/or network slicing. Changes to the IP layer may include adjusting the APN by changing band, traffic template, and/or radio access technology (RAT). The first level is described in regards to method 300 of FIG. 3. The second level is described in regards to method 400 of FIG. 4.

A QoS threshold may be determined for every priority level, in some examples including the four categories described above: (1) autonomous driving, (2) ADAS and safety, (3) infotainment and navigation, and (4) convenience. Parameters, such as the measuring parameters described in regards to FIG. 2, may be weighted and summed into a QoS value. The QoS value may be used for comparison with the QoS threshold in the methods 300 and 400 of FIGS. 3 and 4.

Turning to FIG. 3, a method 300 is shown for the first level of QoS management in accordance with one or more embodiments of the present disclosure. The method 300 may be performed continuously in order to update wireless connection in real-time or near real-time according to parameters such as the parameters described with regards to FIG. 2. For example, the method 300 may be implemented by a TCU of a vehicle, such as the telematics unit 30 of the vehicle 12 of FIG. 1, to increase QoS level above a QoS threshold as described above by changing the RF layer.

The method 300 begins at 302, wherein a connection is established. For example, a wireless connection may be formed between the TCU and a cellular network.

The method 300 proceeds to 304, wherein it is determined whether Wi-Fi (or edge network) offloading is supported. For example, if the QoS value is greater than the QoS threshold, it may be determined that Wi-Fi offloading is not supported. Alternatively, if the QoS value is less than the QoS threshold for each priority level, scanning for an available Wi-Fi network may occur. If a Wi-Fi network is found during scanning, it may be determined that offloading is supported. Thus, determining whether Wi-Fi offloading is supported may include comparing a QoS level with a QoS threshold for one or more priority levels and scanning for an available Wi-Fi network

If it is determined that offloading is supported (YES at 304), the method 300 proceeds to 306, wherein offloading occurs.

306 includes 308, wherein Wi-Fi offloading is enabled.

306 also includes 310, wherein routing policies are applied. Applying routing policies may include selecting appropriate routing policies and implementing the routing policies

306 also includes 312, wherein a data connection is enabled. Enabling a data connection may include connecting to a Wi-Fi or edge network.

The method 300 proceeds from 306 to 314, wherein the data connection is monitored. Monitoring the data connection may include monitoring connectivity in order to detect if the data connection is online (e.g., connected) or offline (e.g., disconnected).

The method 300 proceeds to 316, wherein it is determined whether the data connection is online.

If the data connection is online (YES at 316), the method 300 returns to 314, wherein the data connection is monitored. Monitoring the data connection may continue until the connection is offline.

If the data connection is offline (NO at 316), the method 300 returns to 304, wherein it is determined whether Wi-Fi offloading is supported, as described above.

Alternatively, if Wi-Fi offloading is not achievable due to lack of an available network or the QoS value being above the QoS threshold for one or more priority levels, then alternate methods may be used, such as network slicing. Thus, if it is determined that offloading is not supported (NO at 304), the method proceeds to 318, wherein it is determined whether network slicing is supported.

If network slicing is supported (YES at 318), the method 300 proceeds to 320, wherein network slicing occurs. Network slicing may include adjusting universal software radio peripheral (USRP) rules.

320 includes 322, wherein USRP rules are applied.

320 also includes 324, wherein routing policies are applied. Applying routing policies, similar to step 310, may include selecting appropriate routing policies and implementing the policies.

The method 300 proceeds from 320 to 326, wherein the data connection is monitored. Monitoring the data connection may include checking periodically or continuously for whether the connection is online or offline, similar to 316.

The method 300 proceeds to 328, wherein it is determined whether the data connection is online.

If the data connection is online (YES at 328), the method returns to 326. Monitoring of the data connection may continue until the connection is determined to be offline.

If the data connection is offline (NO at 328), the method 300 returns to 318, wherein it is determined whether network slicing is supported, as described above.

If network slicing is not supported (NO at 318), the method 300 proceeds to 330, wherein the APN is set in the second level. For example, the method 400 of FIG. 4 may be implemented.

The method 300 is exemplary and non-limiting as to the steps or orders of steps in a method in accordance with the present disclosure for managing QoS by adjusting the RF layer. For example, some steps of the method 300 may be executed concurrently or in a different order than shown.

IP layer changes, such as setting an APN that increases QoS, may be implemented in the second level of the model. Turning to FIG. 4, a method 400 is shown for the second level of QoS management in accordance with one or more embodiments of the present disclosure. The method 400 may be part of the method 300 of FIG. 3. As such, the method 400 may be performed by a TCU of a vehicle, such as the telematics unit 30 of FIG. 1, to increase QoS by changing the IP layer.

The method 400 begins at 402, wherein serving cellular tower signal quality and neighboring cellular tower signal quality, network latency, and data connection cost are measured. The serving cell signal quality may be a quality of the signal from a serving cellular tower providing cellular connection to the vehicle. Likewise, the neighboring cellular tower signal quality may be a quality of the signal from a neighboring cellular tower, where the neighboring cellular tower is not the serving cellular tower. In other words, the neighboring cellular tower may be a cellular tower in range but not providing a connection to the TCU. Measuring may include monitoring and receiving data from various sensors, including TCU sensors, vehicle sensors and the like.

The method 400 proceeds to 404, wherein it is determined whether the serving cell quality is above a threshold. Above the threshold may be considered good quality and below the threshold may be considered bad quality.

If the serving cellular tower signal quality is not above the threshold (NO at 404), the method 400 proceeds to 406, wherein it is determined whether the neighboring cellular tower signal quality is above the threshold.

If the neighboring cellular tower signal quality is not above the threshold (NO at 406), the method proceeds to 408, wherein the radio access technology (RAT) is changed. Changing the RAT may include switching between Bluetooth, Wi-Fi, and global system for mobile communications (GSM), universal mobile telecommunications system (UMTS), long-term evolution (LTE), fifth generation new radio (5G NR), and the like, depending for example on which RATs are supported. The RAT may be changed according to which RAT may provide higher QoS level, depending on location of the vehicle and other environment parameters. As such, the QoS management system of the present disclosure may take environment parameters as inputs to a machine learning (ML) model to optimize QoS, as described further below.

Alternatively, if the neighboring cellular tower signal quality is above the threshold (YES at 406), the method 400 proceeds to 410, where the band is changed. Changing the band to a band capable of providing higher QoS may be similarly dependent on environmental factors, for example extent of network traffic on the bands. The QoS management system examples of the present disclosure may more effectively increase QoS due to using such environmental factors in decision making (e.g., classification and adjustments) as described further below.

If the serving cellular tower signal quality is above the threshold (YES at 404), the method proceeds to 412, wherein it is determined whether latency is above a latency threshold. Latency over the latency threshold may be considered high, or in other words communication over the network connection is slow. Latency under the latency threshold may be considered low, or in other words communication over the network is fast. Thus, a lower latency may be desired to increase QoS.

If the latency is above the latency threshold (YES at 412), the method proceeds to 414, wherein the traffic template is changed. The traffic template may define priority groups, such as the four priority categories described above. Changing the traffic template may increase QoS depending on network traffic. For example, a new traffic template may decrease latency under some conditions.

Alternatively, if the latency is not above the latency threshold (NO at 412), the method 400 proceeds to 416 wherein it is determined whether cost is above a cost threshold. The cost of network connection may depend on the type of connection (e.g., cellular or Wi-Fi) and the available networks. For cellular connections and some Wi-Fi connections, the cost of data may be proportional to the amount of data used. Unmetered Wi-Fi connections may have no associated cost.

If the cost is above the cost threshold (YES at 416), the method 400 proceeds to 414, wherein the traffic template is changed, as described above. Changing the traffic template may reduce cost by prioritizing more efficiently for the current network traffic.

If the cost is not above the cost threshold (NO at 416), the method 400 proceeds to 418, wherein the APN is maintained. Maintaining the APN may include maintaining the current RAT, band, and traffic template. The method 400 ends after 418, 408, or 410. The method 400 may be repeated continuously or periodically to update the APN in order to increase QoS level. In other examples, some steps of the method 400 may be executed concurrently or in a different order than shown.

As described above, machine learning models may be implemented in QoS management methods in accordance with the present disclosure to adjust QoS (e.g., by offloading, network slicing, or selecting an APN as described in regards to FIGS. 3 and 4) according to a variety of parameters, such as the parameters of FIG. 2. The machine learning models may utilize statistics of data and intrinsic correlations of environmental and telematics conditions to make predictions of expected end user experience in order to increase QoS level.

Inputs to the machine learning models may include TCU behavior parameters (e.g., TCU behavior parameters 200 of FIG. 2), environment information (e.g., environment parameters 230 of FIG. 2), and crowd sourced vehicle information. For example, behavior parameters of the TCU may include temperature of the hardware, average up and downtime (e.g., latency), central processing unit (CPU) behavior, TCU location, memory usage, and the like. Environment information may include weather such as sun, clouds, wind, rain and the like. Environment information may also include time of day, cellular service coverage map information, road traffic (e.g., vehicle density within an area of interest), trajectory or heading and speed of the vehicle, topography of the location of the vehicle, and the like. Crowd sourcing vehicle information may be vehicle-to-vehicle (V2V) information of TCU behavior shared between vehicles in a vehicle connectivity network such as the network 10 of FIG. 1.

User experience metrics to which QoS is correlated may include throughput (e.g., amount of data transmitted), jitter (e.g., variance in latency), delay (e.g., increased latency), and the like. The use of ML models in accordance with the present disclosure may increase user experience satisfaction according to such metrics compared to QoS management without knowledge of context captured more holistically by the parameters described above. For example, throughput may be increased, and jitter and delay may be decreased. Thus, the ML model may be trained with data representing all potential situations (e.g., combinations of the input parameters) that vehicles and their TCUs may experience. In this way, QoS management systems in accordance with the present disclosure may provide a holistic approach to adjusting vehicle connectivity using ML to further increase QoS beyond what other QoS management systems achieve by considering fewer parameters (e.g., not considering environment parameters).

A first ML model (e.g., the ML model 104 of FIG. 1) may classify the usage scenario and QoS condition. For example, turning to FIG. 5, a system 500 is shown using classification ML model 502 for such classification. An ensemble classifier 526 may include the classification ML model 502 and outputs 506 thereof. The ensemble classifier 526 may be implemented on in-vehicle infotainment (IVI) systems, the TCU (e.g., telematics unit 30 of FIG. 1), edge-based software application platforms, and/or in the cloud (e.g., cloud 106 of FIG. 1).

Inputs 504 to the ML model 502 may include TCU behavior parameters 508 and environment parameters 510. As described above, TCU behavior parameters 508 may include hardware conditions (e.g., temperature), throughput, latency, memory usage, and the like. The TCU behavior parameters 508 may be sourced from TCU sensors. Environment parameters 510 may include weather, trajectory, time of day, road traffic, network coverage, and the like. The environment parameters 510 may be provided by external data sources, such as vehicle sensors, other vehicles, personal wireless devices, and the like. In this way, sensor data and environment factors may be integrated to predict a QoS level.

The ML model 502 may include a usage scenario classifier 512 and a QoS classifier 514. The ML model 502 may be any classification-based algorithm capable of intaking input parameters (e.g., inputs 504) and generating one or more classifications (e.g., outputs 506) according to the input parameters.

The ML model 502 and expert rules 516 may produce outputs 506. The expert rules 516 may be rules relating pre-determined conditions or usage scenarios with QoS levels.

The outputs 506 may include a usage scenario 518 and a QoS level 520 generated by the usage scenario classifier 512, the QoS classifier 514, and the expert rules 516. The QoS level may be classified as good, normal, or bad. For example, a first threshold and a second threshold may define the three categories where below the first threshold is bad, between the first threshold and the second threshold is normal, and above the second threshold is good. The usage scenario 518 may represent a situation in which the TCU is operating. For example, the usage scenario 518 may be dependent on environment and TCU behavior parameters. For example, the usage scenario may describe location and trajectory of the vehicle, surroundings, and network traffic.

The outputs 506 may be used to generate a signal to change controlling parameters 522. For example, the controlling parameters may be changed according to the usage scenario 518, the QoS level 520, and the expert rules 516. If the QoS level is good, the controlling parameters may not be adjusted. However, if the QoS level is normal or bad, the controlling parameters may be adjusted to increase the QoS level.

The signal to change controlling parameters 522 may be sent to the controlling parameters policy 524 on the TCU. Upon receiving the signal to change controlling parameters 522 the controlling parameters policy 522 may change the controlling parameters according to pre-determined policies stored in memory of the TCU. In the system 500, the controlling parameters policy 524 may be a set of static, pre-determined rules for changing the controlling parameters depending on the usage scenario and the QoS level. For example, controlling parameters (e.g., controlling parameters 212 and controlling parameters 224 of FIG. 2) may be adjusted according to the usage scenario 518. Thus, the controlling parameters policy 524 may incite a different response for different combinations of weather, locations, traffic, latency, etc. In this way, the system 500 may use a combination of static rules and dynamic scenario identification to increase QoS. Thus, the system 500 may manage QoS in view of a greater number of parameters, thereby increasing QoS further than other systems including only static rule-based management.

Use of the classification ML model 502 may increase capability of early detection of QoS degradation and proactive adjustment of QoS policies, minimizing disruption in connectivity service quality. For example, the ML model 502 may convert the decision-making boundary to usage scenario rather than purely static rules. Thus, the model 502 may allow continuous refinement of QoS according to operating conditions, including parameters from on-board sensors, network, and/or environmental factors. In this way, the system 500 may provide improved user experience metrics such as increased throughput and reduced jitter and delay, compared to other QoS management systems.

Turning to FIG. 6, another example is shown of a system 600, including the ML model 502 and a second ML model: reinforcement learning agent 602. Like the system 500, the system 600 may be incorporated into a vehicle telematics system, such as the vehicle 12 and telematics unit 30 of FIG. 1.

The ML model 502 may receive the inputs 504 and produce the outputs 506 accordingly, as described above. The reinforcement learning agent 602 may receive the outputs 506 as inputs. The reinforcement learning agent 602 may be any ML model capable of decision making and optimization, for example a deep Q-learning algorithm. There may be a Q-learning table stored in memory of the TCU to choose an action under a specific environment according to the usage scenario 518. For example, such actions may include changing APN or bandwidth as described above. Controlling parameters policy 524 may be changed (e.g., updated) using output of the reinforcement learning agent 602. The reinforcement learning agent 602 may serve as the QoS policy. As such, the reinforcement learning agent 602 may be trained with no policy until converging with a stable policy producing optimized rewards. Such rewards may include change of key performance metrics, including increased throughput, decreased jitter, and decreased delay of data transmission. In the system 600, the controlling parameters policy 524 may be a dynamic set of rules for changing the controlling parameters based on the usage scenario 518 converged upon by the reinforcement learning agent 602.

A cumulative reward the reinforcement agent receives over a period of time or number of episodes may be used to quantify performance metrics of the reinforcement learning agent 602. Further, convergence time, or a length of time taken for the reinforcement learning agent 602 to converge on the stable policy, and stability of the learned policy may also be evaluated to assess the ability of the reinforcement learning agent 602 to make informed decisions that optimize the QoS. Additionally, specific network performance indicators such as latency, throughput, or packet loss rate may be used to measure the impact of reinforcement learning agent 602 decisions on network performance.

In this way, the system 600 uses sensor data and information about the surrounding environment to adaptively optimize QoS policies, in addition to classifying scenarios. The reinforcement learning agent may learn to balance different actions based on the rewards and penalties it receives, leading to a self-optimizing system that can continually improve its performance over time. Such a system may increase adaptability in dynamic network environments, thereby increasing QoS levels in a greater variety of scenarios.

Turning to FIG. 7, an example software architecture 700 is schematically depicted. The software may be installed on a TCU 702 of a vehicle, such as the telematics unit 30 of vehicle 12 shown in FIG. 1. The TCU 702 may include an application processor 704, an Ethernet physical layer (PHY) 706, a modem processor 708, and a Wi-Fi module 710.

The Ethernet PHY 706 may be a transceiver. One or more virtual local area networks (VLANs) may communicatively connect the Ethernet PHY 706 with a network stack 726 of the application processor 704. One or more PDN connections may be established between the network stack 726 and the modem processor 708. The Wi-Fi module 710 may enable the TCU 702 to connect to Wi-Fi networks, for example when Wi-Fi offloading is desired, along with Wi-Fi driver 728 of the application processor 704. The application processor 704 may also include radio interface layer (RIL) 730 and quality monitoring interface (QMI) 732.

QoS control 712 may be part of the application processor 704. QoS control 712 may implement the method 800 of FIG. 8 to manage QoS for the TCU 702. For example, The QoS control 712 may communicate with traffic control 714, IP performance measurement 716, RF performance measurement 718, routing 720, radio control 722, and packet data network (PDN) control 724. PDN control 724 may control APN and GBR.

Turning to FIG. 8, a flowchart of a method 800 is shown for implementing a QoS management system of telematics unit in a vehicle in accordance with one or more embodiments of the present disclosure. The method 800 may be completed by upon execution of instructions stored in memory on the telematics unit and/or remotely such as in the cloud. The method 800 may be implemented by QoS management systems with a classification-based ML model, such as the system 500 of FIG. 5. The method 800 may also be applicable for QoS management systems with both a classification-based ML model and a reinforcement learning agent, such as system 600 of FIG. 6.

The method 800 begins at 802, wherein TCU behavior parameters and environment parameters are received. For example, the TCU behaviors and the environment parameters may be the TCU behavior parameters 508 and the environment parameters 510, respectively, of FIGS. 5 and 6. As such, the TCU behavior parameters and environment parameters may include measuring parameters, such as the measuring parameters 204 and the measuring parameters 216 of FIG. 2. For example, the TCU behavior parameters may include signal quality and latency. Environment parameters may include weather, surroundings, vehicle trajectory, cellular towel positions and traffic conditions, and the like. The TCU behavior parameters may be received from the TCU, for examples sensors positioned at the TCU. Environment parameters may be received from other vehicle sensors, and inter-vehicle communications. Receiving the parameters may comprise receiving the parameters at a CPU of the vehicle and/or the TCU, for example. Receiving the TCU behavior parameters and environment parameters may comprise various sensors, including sensors of the vehicle and sensors of other vehicles, monitoring the TCU behavior parameters and the environment parameters.

The method 800 proceeds to 804, wherein a usage scenario classifier, a QoS classifier, and expert rules are used to determine a usage scenario and a QoS level from the TCU behavior parameters and the environment parameters. The usage scenario classifier and the QoS classifier may be classification-based machine learning models that classify the usage scenario and the QoS level. The TCU behavior parameters and the environment parameters may be fed into a classifying ML model comprising the usage scenario classifier and the QoS classifier as inputs, as described in regards to FIGS. 5 and 6. The usage scenario classifier, the QoS classifier, and the expert rules may produce the usage scenario and the QoS level based on both pre-determined rules and learned classifications. The usage scenario may encompass a variety of factors, including whether the vehicle is parked or moving based on vehicle sensors, whether the vehicle is in a city or countryside according to traffic levels and geographic location or navigation-based information, for examples. The QoS classifier may classify the QoS level into one of two or more categories. For example, the QoS classifier may identify whether a QoS value is above or below one or more thresholds, as described above in regards to FIG. 3. In one example of many, the QoS level may be classified as good, normal, or bad. For example, a first threshold and a second threshold may define the three categories where below the first threshold is bad, between the first threshold and the second threshold is normal, and above the second threshold is good. In other examples, there may be further categories with different thresholds.

The method 800 proceeds to 806, wherein controlling parameters are changed according to controlling parameter policy. The controlling parameter policy may use the usage scenario and the QoS level determined at 804 to select controlling parameter adjustments. Controlling parameters may include controlling parameters 212 and controlling parameters 224 of FIG. 2, for example. For example, a new APN may be selected.

The method 800 proceeds to 808, wherein the usage scenario and the QoS level are optionally provided to a reinforcement learning agent. If the QoS management system includes a reinforcement learning agent such as the reinforcement learning agent 602 of FIG. 6, 808 may be completed. If the QoS management system does not include a reinforcement learning agent, 808 is not included.

The method 800 proceeds to 810, wherein the controlling parameter policy is optionally updated. For example, the controlling parameter policy may be updated by the reinforcement learning agent, in examples where the reinforcement learning agent is included. The reinforcement learning agent may learn continuously during operation of the QoS management system from rewards and penalties from adjusting the controlling parameter policy. In this way, control of network connection may be optimized during use, further tailoring connectivity parameters to use cases to increase QoS. The method 800 ends.

The technical effect of the QoS management systems and methods disclosed herein is to increase QoS for vehicle connectivity using machine leaning to provide context-based adjustments to RF and IP layers. QoS management systems and methods of the present disclosure may be sensitive to changes in environment and telematics unit behavior in order to tailor connectivity to different scenarios classified by the ML model. Policy may then dictate a response (e.g., adjusting controlling parameters) according to the classified scenario. Further, in at least some examples, a reinforcement learning agent may update the policy to optimize QoS during operation. In this way, throughput may be increased, and jitter and delay may be decreased.

FIGS. 1 and 5-7 show schematics of an example configuration with relative positioning of the various components. As used herein, the terms "approximately" is construed to mean plus or minus five percent of the range unless otherwise specified.

It will be appreciated that the configurations and routines disclosed herein are exemplary in nature, and that these specific embodiments are not to be considered in a limiting sense, because numerous variations are possible. Moreover, unless explicitly stated to the contrary, the terms "first," "second," "third," and the like are not intended to denote any order, position, quantity, or importance, but rather are used merely as labels to distinguish one element from another. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A quality of service, QoS, management system (500, 600) of a telematics control unit, TCU, (702) of a vehicle (12), comprising:
a classification machine learning model (502) adapted to receive TCU behavior parameters (200) and environment parameters (230) and output a usage scenario (518) and a QoS level (520) according to the TCU behavior parameters and the environment parameters.

2. The QoS management system (500, 600) of claim 1, further comprising a reinforcement learning agent (602) adapted to update controlling parameter policy according to the usage scenario (518) and the QoS level (520).

3. The QoS management system (500, 600) of claim 2, wherein the controlling parameter policy is a set of rules for adjusting controlling parameters (212, 224) according to the usage scenario (518) and the QoS level (520).

4. The QoS management system (500, 600) of any preceding claim, wherein the environment parameters comprise at least some of location, weather, time of day, and signal coverage map.

5. The QoS management system (500, 600) of any preceding claim, wherein the usage scenario (518) describes location and trajectory of the vehicle, surroundings, and network traffic.

6. The QoS management system (500, 600) of any preceding claim, wherein the TCU behavior parameters comprise signal quality and latency.

7. The QoS management system (500, 600) of any preceding claim, wherein the TCU behavior parameters and the environment parameters are received from sensors of the vehicle and other vehicles.

8. A method (800, 400, 300) for quality of service, QoS, management for a vehicle (12), comprising:
receiving telematics control unit, TCU, (702) behavior parameters (200) and environment parameters (230);
using a usage scenario classifier (512), a quality of service, QoS, classifier, and expert rules (516) to determine a usage scenario (518) and a QoS level (520) from the TCU behavior parameters and the environment parameters; and
changing controlling parameters according to a controlling parameter policy.

9. The method (800, 400, 300) of claim 8, wherein the controlling parameter policy is a set of static, pre-determined rules for changing the controlling parameters depending on the usage scenario (518) and the QoS level (520).

10. The method (800, 400, 300) of claim 8 or 9, further comprising providing the usage scenario (518) and the QoS level (520) to a reinforcement learning agent (602).

11. The method (800, 400, 300) of claim 10, further comprising changing controlling parameter policy using output of the reinforcement learning agent (602) and preferably the controlling parameter policy is a dynamic set of rules for changing the controlling parameters based on the usage scenario (518), and wherein controlling parameter policy is converged upon by the reinforcement learning agent (602).

12. The method (800, 400, 300) of any of claims 8 to 11, wherein the usage scenario (518) classifier (512) and the QoS classifier (514) are classification-based machine learning models (104) that classify the usage scenario (518) and the QoS level (520).

13. The method (800, 400, 300) of any of claims 8 to 12, wherein the controlling parameters comprise band, radio access technology, and APN.

14. The method (800, 400, 300) of any of claims 8 to 13, wherein the controlling parameters comprise frequency, channel, and width.

15. The method of any of claims 8 to 14, wherein receiving the TCU behavior parameters and environment parameters comprises various sensors, including sensors of the vehicle and sensors of other vehicles, monitoring the TCU behavior parameters and the environment parameters.
